# FASCICULE DE BREVET EUROPEEN

(11) **EP 1 242 269 B1**
(45) Date de publication et mention de la délivrance du brevet: **06.04.2005**
(21) Numéro de dépôt: 00993600.6
(22) Date de dépôt: 21.12.2000
(51) Int. Cl.: B60S 1/08

(54) **DISPOSITIF D'ESSUYAGE ET PROCEDE D'INITIALISATION AUTOMATIQUE DU SYSTEME DE COMMANDE DU MOTEUR**
WISCHERVORRICHTUNG UND VERFAHREN ZUR AUTOMATISCHEN INITIALISIERUNG DES MOTORSTEUERUNGSSYSTEMS
WIPER DEVICE AND METHOD FOR AUTOMATIC INITIALISATION OF THE MOTOR CONTROL SYSTEM

(30) Priorité: 27.12.1999 FR 9916518
(43) Date de publication de la demande: 25.09.2002
(73) Titulaire: VALEO SYSTEMES D'ESSUYAGE, 78321 La Verrière (FR)
(72) Inventeur: GLOAGUEN, Daniel, F-62000 LE MANS (FR); MACAIRE, Franck, F-86100 Chatellerault (FR)
(86) Numéro de dépôt international: PCT/FR2000/003626
(87) Numéro de publication internationale: WO 2001/047757

(56) Documents cités:
- DE-A- 19 634 559
- DE-A- 19 732 520
- US-A- 5 588 173

## Description

L'invention propose un dispositif d'essuyage pour une vitre d'un véhicule automobile.

L'invention propose aussi un procédé d'initialisation automatique du système de commande du moteur du dispositif d'essuyage pour une vitre d'un véhicule automobile.

La quasi-totalité des véhicules automobiles sont équipés de dispositifs d'essuyage constitués d'un élément d'essuyage tel qu'un balai d'essuie-glace. L'élément d'essuyage permet, par un mouvement de balayage alterné rotatif ou linéaire, d'essuyer une zone d'une vitre d'un véhicule.

Le mouvement de balayage alterné peut par exemple- être obtenu par un système dit bielle-manivelle entraîné par un moteur qui tourne dans un seul sens. Dans le but de diminuer l'encombrement du dispositif, le système bielle-manivelle est supprimé. Le mouvement est alors obtenu par la rotation alternée, dans un sens puis dans l'autre, du moteur. Entre deux inversions de sens du moteur, le balai parcourt une fois la zone à essuyer.

Cette deuxième solution est notamment souvent retenue pour l'essuyage de la vitre arrière d'un véhicule. Cependant, il est nécessaire de régler le dispositif en fonction de la zone à essuyer qui peut être différente pour chaque modèle de véhicules, voire même pour chaque type d'essuie-glace monté sur un même modèle.

La détermination de cette zone est généralement obtenue par le montage d'un moteur et de son système de commande spécifique pour chaque type de zone à essuyer. De plus, le montage initial du balai doit être réalisé dans une position précise qui dépend de la position angulaire de l'arbre de sortie du moteur.

Cette solution est onéreuse puisqu'elle nécessite l'utilisation d'un matériel qui n'est pas standard, ainsi qu'un montage nécessitant une précision importante.

L'état de l'art est également représenté par le document DE-A-19732520.

L'invention a pour but de remédier à ces inconvénients et de proposer un dispositif d'essuyage standard et simple à installer, ainsi qu'un procédé d'initialisation automatique de son système de commande.

Dans ce but, l'invention propose un dispositif d'essuyage d'une vitre d'un véhicule automobile du type comportant un moteur électrique dont l'arbre de sortie entraîne un élément d'essuyage tel qu'un essuie-glace qui essuie la vitre par un mouvement de balayage alterné, deux butées mécaniques qui coopèrent avec l'élément d'essuyage pour déterminer sa course maximum et un système de commande du moteur électrique, du type qui comporte un capteur de position et des moyens de traitement des informations fournies par le capteur de façon à déterminer la position des butées (dispositif tel que divulgué dans: DE-A-19732520) caractérisé en ce que le moteur électrique comporte un boîtier, et au moins une butée est une partie du boîtier.

Selon d'autres caractéristiques du dispositif :
- le système de commande comporte des moyens de stockage de données pour mémoriser notamment des informations représentatives de la position des butées.
- au moins une butée est un détail de forme de la structure du véhicule ;
- au moins une butée est un élément intermédiaire rapporté sur le moteur électrique ;
- l'élément intermédiaire est une bague d'étanchéité du moteur électrique traversée par son arbre de sortie ;
- le capteur de position est un capteur de position absolue.

L'invention propose aussi un procédé d'initialisation automatique du système de commande du moteur du dispositif d'essuyage du type de celui décrit ci-dessus caractérisé en ce que lors de sa mise sous tension, le système de commande initie un cycle d'apprentissage qui permet de déterminer la position des deux butées mécaniques.

Selon d'autres caractéristiques du procédé :
- lors de la première mise sous tension, le système de commande détecte qu'il s'agit de la première mise sous tension du dispositif, et il initie le cycle d'apprentissage ;
- la première mise sous tension du dispositif d'essuyage est détectée lorsque les moyens de stockage de données ne contiennent pas de données représentatives de la position des butées mécaniques ;
- le cycle d'apprentissage comporte les étapes successives suivantes :
   - mise en rotation du moteur qui entraîne alors l'élément d'essuyage dans un premier sens jusqu'à ce que le système de commande détecte que l'élément d'essuyage est en appui avec la première butée mécanique,
   - stockage des informations représentatives de la position de la première butée,
   - inversion du sens de rotation du moteur électrique qui entraîne alors l'élément d'essuyage dans un second sens jusqu'à ce que le système de commande détecte que l'élément d'essuyage est en appui avec la seconde butée mécanique,
   - stockage des informations représentatives de la position de la deuxième butée,
   - détermination, notamment par calcul, par le système de commande de l'information représentative de la course maximum de l'élément d'essuyage qui correspond à son déplacement entre les deux butées mécaniques ;
- le système de commande détecte l'appui entre l'élément d'essuyage et les butées lorsque la valeur du courant qui alimente le moteur électrique est supérieure à une valeur prédéterminée ;
- le système de commande détermine la valeur représentative du déplacement effectif de l'élément d'essuyage qui correspond à la zone qui doit être essuyée et qui est inférieure ou égale à la course maximum de l'élément d'essuyage entre les deux butées mécaniques ;
- à partir de la valeur représentative du déplacement effectif et d'une ou plusieurs informations représentatives du nombre de cycles d'essuyage de la vitre à réaliser au cours d'une durée déterminée, le système de commande détermine et stocke la ou les valeurs représentatives de la vitesse de déplacement correspondante de l'élément d'essuyage.

D'autres caractéristiques et avantages de l'invention apparaîtront à la lecture de la description détaillée qui suit pour la compréhension de laquelle on se reportera aux dessins annexés parmi lesquels :
- la figure 1 représente en perspective éclatée un dispositif d'essuyage réalisé conformément aux enseignements de l'invention qui est constitué principalement d'un moteur, d'un élément d'essuyage et d'un système de commande du moteur ;
- la figure 2 est une vue en section transversale du moteur électrique et d'une butée mécanique solidaire de l'élément d'essuyage ;
- les figures 3 et 4 sont des vues similaires à celle représentée à la figure 2, la buté mécanique ayant des dimensions différentes ;
- la figure 4 représente schématiquement les mouvements de l'élément d'essuyage représenté par les angles balayés lors de la première utilisation du dispositif d'essuyage et lors de son fonctionnement ;
- la figure 5 est une vue similaire à celle représentée à la figure 2, les angles de balayage de l'élément d'essuyage étant représentés.

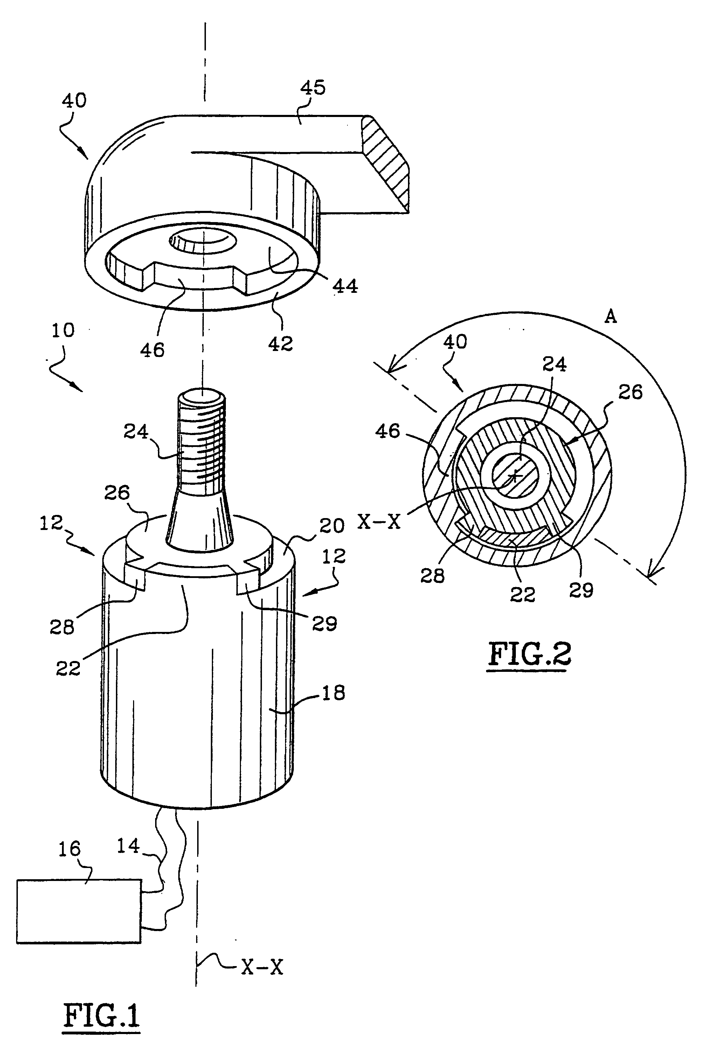

Dans la suite de la description une orientation inférieure supérieure sera utilisée, à titre non limitatif, conformément à l'orientation de bas en haut de la figure 1.

La figure 1 représente un dispositif d'essuyage 10 en perspective éclatée.

Le dispositif d'essuyage 10 comporte essentiellement un moteur électrique 12 d'axe de rotation X-X qui est relié par des fils électriques 14 à un système 16 de commande de son alimentation. Le moteur électrique 12 se constitue notamment d'un boîtier cylindrique 18 qui comporte sur la périphérie extérieure de sa face transversale supérieure 20 un secteur d'anneau 22. La face supérieure 20 est traversée en son centre par un arbre de sortie et d'entraînement 24 d'axe X-X.

Un capteur de position non représenté, tel qu'un capteur de position absolue, est situé à l'intérieur du boîtier cylindrique 18 du moteur électrique. Il permet de déterminer la position angulaire absolue de l'arbre de sortie 24 par rapport à la référence fixe que constitue le boîtier 18.

Le système de commande 16 du moteur électrique 12 permet de commander la mise en rotation de l'arbre de sortie 24 dans un sens ou dans l'autre. Il comporte notamment des moyens électroniques de traitement des informations telles que des informations fournies par le capteur de position absolue ou par le moteur électrique 12 lui-même, est notamment l'intensité, l'attention et les signes du courant d'alimentation, ainsi que des moyens de stockage d'informations.

Une bague d'étanchéité 26 est disposée sur la face supérieure 20 du boîtier 18 autour de l'arbre de sortie 24. Elle empêche l'intrusion d'éléments polluants tels que de l'eau ou de la poussière dans le moteur électrique 12. La bague d'étanchéité 26 a une forme sensiblement annulaire, une première 28 et une seconde 29 oreilles s'étendent radialement vers !'extérieur depuis sa périphérie cylindrique et, elles sont séparées angulairement d'une distance correspondant à la longueur angulaire du secteur d'anneau 22.

Un capot 40 est constitué d'une jupe annulaire cylindrique transversale 42 et d'une paroi supérieure 44. La jupe 42 est solidaire d'un élément d'essuyage 45 tel qu'un bras d'essuie-glace représenté partiellement à la figure 1.

Le capot 40 coopère avec la partie supérieure du moteur électrique 12. Pour ce faire la paroi supérieure comporte un trou d'axe X-X dont le diamètre correspond au diamètre de l'arbre de sortie 24.

Le diamètre de la face annulaire intérieure concave de la jupe 42 correspond au diamètre extérieur de l'ensemble défini par le secteur d'anneau 22 et les oreilles 28, 29. Ainsi, la jupe 42 peut pivoter autour de l'axe X-X par rapport au boîtier 18 du moteur électrique 12.

Une butée 46 est située sur la face annulaire intérieure de la jupe annulaire cylindrique 42. La position de la butée 46 est déterminée lors de la fabrication par rapport à la direction de l'élément d'essuyage 45. Après l'assemblage du capot 40 sur le moteur électrique 12 la rotation du capot 40, et par conséquent de l'élément d'essuyage 45, est limitée par le débattement annulaire de la butée 46 à l'intérieur du secteur angulaire de débattement entre les deux oreilles 28 et 29.

Le montage du dispositif d'essuyage 10 sur le véhicule est le suivant.

Le moteur électrique 12, ainsi que le système de commande 16, sont fixés sur un élément de structure du véhicule. Si cela est nécessaire, une bague d'étanchéité 26 est disposée sur la face transversale supérieure du boîtier 18 puis, le dispositif d'essuyage muni du capot 40 est placé autour de l'arbre de sortie 24. Le capot 40 et le dispositif d'essuyage sont alors fixés sur l'arbre de sortie 24 du moteur électrique 12 de façon à lier en rotation l'arbre 24 et le capot 40.

Avantageusement, la partie d'extrémité supérieure de l'arbre de sortie 24 est filetée, conformément à la figure 1, ce qui permet un serrage par vissage du capot 40 sur l'arbre de sortie 24 du moteur électrique 12.

Lors de la rotation du moteur électrique 12, l'arbre de sortie 24 entraîne en rotation le capot 40 jusqu'à ce que la butée 46 vienne en contact contre la première oreille 28, conformément à la figure 2. Lorsque le sens de rotation du moteur est inversé, le dispositif d'essuyage balaye la vitre sur un angle A jusqu'à ce que la butée 46 soit en contact contre la seconde oreille 29.

Ainsi, en assemblant sur le moteur électrique 12 une bague d'étanchéité 26 comportant des oreilles 28, 29 de dimension différente, il est possible de faire varier l'angle A de la zone maximale balayée par le dispositif d'essuyage.

Les dimensions des oreilles 28, 29 peuvent aussi être différentes pour les première 28 et seconde 29 oreilles.

Il est donc possible, à partir d'un moteur électrique 12, d'un système de commande 16 et d'un capot 40 standards de modifier l'angle A de la zone maximale balayée en changeant la bague de butée(s) 26. Ainsi, tous les véhicules peuvent être équipés d'un moteur électrique 12 et d'un capot 40 standards, une bague d'étanchéité 26 différente étant utilisée pour chaque modèle de véhicule et/ou d'essuie-glace.

Chaque moteur 12, selon qu'il est monté sur un modèle ou sur un autre, doit être commandé de façon différente. Ainsi, lors du montage du moteur électrique 12 sur un véhicule, les moyens de stockage du système de commande 16 du moteur électrique 12 sont vierges.

Cette solution permet une réduction importante des coûts de fabrication du dispositif d'essuyage.

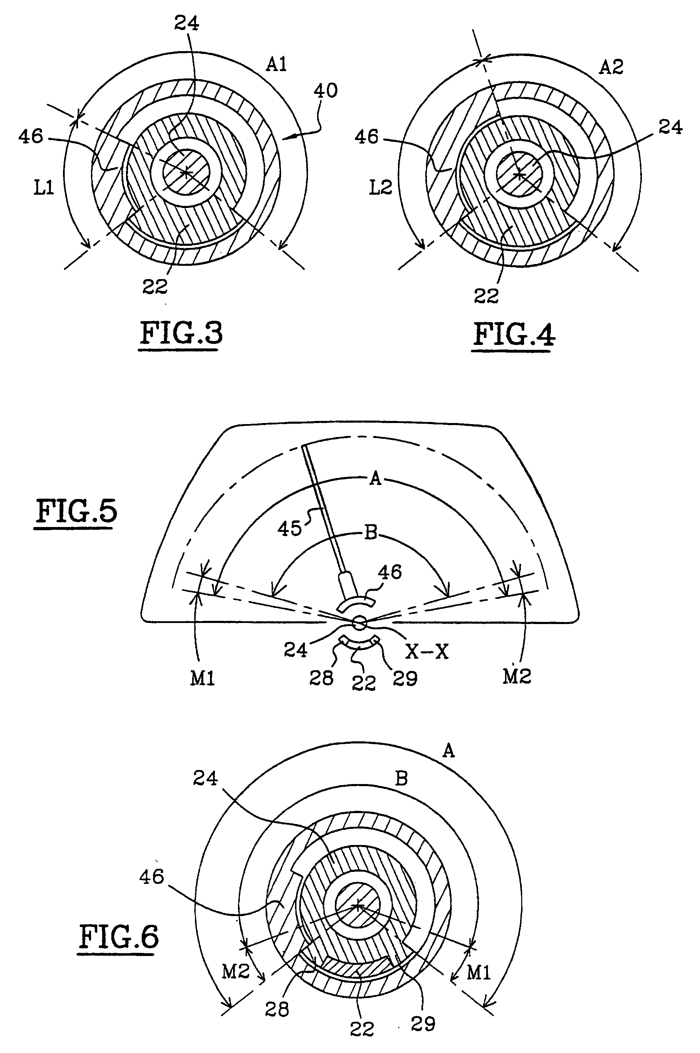

Selon une variante, le moteur électrique 12 ainsi que la bague d'étanchéité 26 sont standards, les différents angles A de la zone maximale balayée sont obtenus par des capots 40 ayant des butées 46 de dimensions différentes. Dans ce cas les oreilles 28 et 29 peuvent être supprimées. La figure 3 illustre un dispositif d'essuyage 10 dont le capot 40 comporte une butée 46 de longueur ou extension angulaire L1, l'élément d'essuyage 45 balaye alors une zone d'angle A1. La figure 4 propose une butée 46 de longueur L2 supérieure à la longueur L1, l'angle balayé A2 étant alors inférieur à l'angle A1.

Selon une autre variante, non représentée, les butées qui déterminent l'angle A de la zone balayée par l'élément d'essuyage 45 est un détail de forme réalisé sur la structure du véhicule. Lors du balayage, la course de l'élément d'essuyage 45 est limitée par ces butées.

L'invention propose aussi un procédé d'initialisation automatique du dispositif d'essuyage 10. En effet, il est possible que la butée 46 entre en contact avec une des oreilles 28 ou 29 lors de chaque balayage. Cependant, un tel fonctionnement provoque des chocs qui sont d'autant plus forts que la vitesse de rotation de l'élément d'essuyage 45 est élevée. Les chocs répétés nuisent au confort et entraînent une usure rapide du dispositif d'essuyage 10.

La figure 5 représente schématiquement un dispositif d'essuyage réalisé conformément aux enseignements de l'invention, ainsi que les différents secteurs balayés par l'élément d'essuyage 45 au cours d'un cycle d'apprentissage et au cours des cycles de fonctionnement dit "normal".

Lors de la première mise de sous tension du dispositif d'essuyage, le système de commande 16 détecte que les moyens de stockage sont vierges. Il initie alors un cycle d'apprentissage qui permet de déterminer la position des butées mécaniques qui délimitent l'angle A correspondant à la course maximum de l'élément d'essuyage 45.

Dans la suite la description les butées mécaniques qui délimitent l'angle A sont les oreilles 28 et 29 coopèrant avec la butée 46.

Le cycle d'apprentissage consiste à mettre en rotation le moteur électrique 12, à une vitesse réduite, dans un premier sens qui peut être le sens anti-horaire. L'élément d'essuyage 45 est alors entraîné en rotation jusqu'à ce que la butée 46 entre en contact avec la première oreille 28, conformément à la figure 6. La venue en butée provoque une augmentation importante de l'intensité d'alimentation du moteur électrique 12 et le système de commande 16 détecte cette augmentation et stocke l'information représentative de la position de la première oreille 28 qui est fournie par le capteur de position.

Le système de commande 16 provoque alors l'inversion du sens de rotation du moteur 12 provoquant alors le balayage d'une zone comportant notamment la zone à essuyer, jusqu'à ce que la butée 46 entre en contact avec la seconde oreille 29. De façon similaire le système de commande 16 détecte l'augmentation de l'intensité et stocke l'information représentative de la position de la seconde oreille 29.

Ce va-et-vient, effectué à vitesse réduite, peut être répété plusieurs fois, de façon que le système de commande 16 détermine précisément la position des première 28 et seconde 29 oreilles, par exemple par le calcul d'une moyenne.

Le système de commande 16 détermine ainsi, notamment par calcul, l'information représentative de la course maximum de l'élément d'essuyage 45 qui correspond à sa course, de l'angle A, entre les deux oreilles 28 et 29.

Le système de commande 16 détermine ensuite le déplacement ou balayage effectif du dispositif d'essuyage qui correspond au balayage d'une zone délimitée par un angle B centré sur l'axe X-X. L'angle B correspond à la différence entre l'angle A correspondant à la course maximum du dispositif d'essuyage et les angles M1 et M2 situés aux extrémités de l'angle A. Les angles M1 et M2 correspondent à des marges de fonctionnement pour que le dispositif d'essuyage ne vienne pas en contact avec les oreilles 28 et 29 à l'extrémité de chacun de ses mouvements en cycle normal d'essuyage. Les informations représentatives du déplacement effectif sont stockées par les moyens de stockage.

Si le capteur de position est un capteur de position absolue les informations représentatives du déplacement effectif peuvent correspondre aux valeur des deux extrémités de l'angle B dans le repère absolu du capteur.

Ensuite, à partir des informations représentatives de la course effective de l'élément d'essuyage 45 et d'une ou plusieurs informations qui sont représentatives des nombres de balayages de la vitre à réaliser au cours d'une durée déterminée, le système de commande 16 détermine les valeurs représentatives des vitesses de déplacement qui correspondent à chacun des nombres de balayage à effectuer. Par exemple, si pour des conditions météorologiques données, l'élément d'essuyage 45 doit balayer la vitre trente fois par minute, et que l'angle B de la course effective est égale à 2 radians, la vitesse de rotation moyenne du moteur électrique doit être égal à 60 radians par minute.

Les moyens de stockage permettent de mémoriser les valeurs représentatives des vitesses de déplacement de l'élément d'essuyage 45.

L'initialisation automatique du dispositif d'essuyage 10 est alors terminée.

Par la suite, lorsque l'utilisateur du véhicule commande la mise en route du dispositif d'essuyage 10, il fonctionne selon le cycle dit normal.

Par exemple, l'utilisateur actionne un sélecteur dont les graduations correspondent à un nombre de balayage de la vitre à réaliser au cours d'une durée déterminée, le système de commande 16 transmet une information au moteur électrique 12 permettant sa mise en rotation à une vitesse déterminée. Au cours de la rotation de l'élément d'essuyage 45, le capteur de position transmet l'information représentative de la position de l'élément d'essuyage 45 au système de commande 16. Lorsque la valeur de l'information transmise est égale à la valeur de l'information représentative de l'angle d'une extrémité de l'angle B, le système de commande 16 inverse le sens de rotation du moteur 12 jusqu'à ce que l'élément essuyage soit dans la position correspondant à l'autre extrémité de l'angle B.

Le dispositif d'essuyage fonctionne ainsi jusqu'à ce que l'utilisateur désire arrêter l'essuyage ou modifier la vitesse de balayage de l'élément d'essuyage 45.

Lors des mises sous tension suivantes du dispositif d'essuyage 10, le système de commande 16 détecte qu'il a déjà été mis sous tension, il fonctionne alors directement selon le cycle normal.

Selon une variante, le dispositif d'essuyage 10 peut, après un nombre d'essuyages déterminé, réinitialiser les moyens de stockage du système de commande 16, et recommencer le cycle d'apprentissage. Un tel fonctionnement permet d'éviter des dérives du dispositif d'essuyage 10 telles qu'un décalage angulaire progressif de l'élément d'essuyage 45 par rapport à l'arbre d'entraînement 24.

Un tel dispositif d'essuyage 10 fonctionnant selon un procédé conforme à l'invention permet de livrer des dispositifs d'essuyage qui sont standardisés quel que soit l'angle de rotation correspondant à la course effective de l'élément d'essuyage 45 que l'on souhaite obtenir en fonctionnement normal. Ainsi un dispositif d'essuyage 10 unique peut équiper toute sorte de véhicule.

De plus, il est possible de monter l'élément d'essuyage 45 dans n'importe quelle position angulaire par rapport à l'arbre de sortie 24 du moteur électrique 12, ce qui simplifie le montage et diminue le temps d'assemblage du dispositif d'essuyage 10 sur un véhicule.

Avantageusement, le dispositif d'essuyage 10 peut comporter un montage simplifié de l'élément d'essuyage 45 sur l'arbre de sortie 24 qui diminue encore le temps d'assemblage du dispositif 10.

La description qui précède propose un di spositif d'essuyage 10 qui est mis en rotation autour d'un axe X-X de façon à balayer une zone correspondante à un secteur angulaire.

De façon similaire, un dispositif d'essuyage dit linéaire peut fonctionner selon un procédé d'initialisation automatique analogue.

## Revendications

1. Dispositif d'essuyage (10) d'une vitre d'un véhicule automobile du type comportant un moteur électrique (12) dont l'arbre de sortie (24) entraîne un élément d'essuyage (45) tel qu'un essuie-glace qui essuie la vitre par un mouvement de balayage alterné, deux butées mécaniques (22, 28, 29, 46) qui coopèrent avec l'élément d'essuyage (45) pour déterminer sa course maximum et un système de commande (16) du moteur électrique (12), et du type qui comporte un capteur de position et des moyens de traitement des informations fournies par le capteur de façon à déterminer la position des butées (28, 29), **caractérisé en ce que** le moteur électrique (12) comporte un boîtier, et **en ce qu'**au moins une butée (22) est une partie du boîtier.

2. Dispositif d'essuyage (10) selon la revendication précédente, **caractérisé en ce que** le système de commande (16) comporte des moyens de stockage de données pour mémoriser notamment des informations représentatives de la position des butées (28, 29).

3. Dispositif d'essuyage (10) selon l'une des revendications 1 ou 2, **caractérisé en ce qu'**au moins une butée (28, 29) est un détail de forme de la structure du véhicule.

4. Dispositif d'essuyage (10) selon l'une quelconques des revendications précédentes, **caractérisé en ce qu'**au moins une butée (28, 29) est un élément intermédiaire (26) rapporté sur le moteur électrique (12).

5. Dispositif d'essuyage (10) selon la revendication précédente, **caractérisé en ce que** l'élément intermédiaire (26) est une bague d'étanchéité du moteur électrique (12) traversée par son arbre de sortie (24).

6. Dispositif d'essuyage (10) selon l'une quelconque des revendications précédentes, **caractérisé en ce que** le capteur de position est un capteur de position absolue.

7. Procédé d'initialisation automatique du système de commande du moteur d'un dispositif d'essuyage (10) selon l'une quelconque des revendications précédentes, **caractérisé en ce que** lors de sa mise sous tension, le système de commande 16 initie un cycle d'apprentissage qui permet de déterminer la position des deux butées mécaniques (28, 29).

8. Procédé d'initialisation automatique selon la revendication précédente, **caractérisé en ce que** lors de la première mise sous tension, le système de commande (16) détecte qu'il s'agit de la première mise sous tension du dispositif, et **en ce qu'**il initie le cycle d'apprentissage.

9. Procédé d'initialisation automatique selon la revendication précédente, **caractérisé en ce que** la première mise sous tension du dispositif d'essuyage (10) est détectée lorsque les moyens de stockage de données ne contiennent pas de données représentatives de la position des butées mécaniques (28, 29).

10. Procédé d'initialisation automatique selon l'une quelconque des revendications 7 à 9, **caractérisé en ce que** le cycle d'apprentissage comporte les étapes successives suivantes:
- mise en rotation du moteur (12) qui entraîne alors l'élément d'essuyage (45) dans un premier sens jusqu'à ce que le système de commande détecte que l'élément d'essuyage (45) est en appui avec la première butée mécanique (28),
- stockage des informations représentatives de la position de la première butée (28),
- inversion du sens de rotation du moteur électrique qui entraîne alors l'élément d'essuyage (45) dans un second sens jusqu'à ce que le système de commande détecte que l'élément d'essuyage (45) est en appui avec la seconde butée mécanique (29),
- stockage des informations représentatives de la position de la deuxième butée (29),
- détermination, notamment par calcul, par le système de commande de l'information représentative de la course maximum de l'élément d'essuyage (45) qui correspond à son déplacement entre les deux butées mécaniques (28, 29).

11. Procédé d'initialisation automatique selon la revendication précédente, **caractérisé en ce que** le système de commande détecte l'appui entre l'élément d'essuyage (45) et les butées (28, 29) lorsque la valeur du courant qui alimente le moteur électrique (12) est supérieure à une valeur prédéterminée.

12. Procédé d'initialisation automatique selon l'une quelconque des revendications 7 à 11, **caractérisé en ce que** le système de commande (16) détermine la valeur représentative du déplacement effectif de l'élément d'essuyage( 45) qui correspond à la zone qui doit être essuyée et qui est inférieure ou égale à la course maximum de l'élément d'essuyage (45) entre les deux butées mécaniques (28, 29).

13. Procédé d'initialisation automatique selon la revendication précédente, **caractérisé en ce que**, à partir de la valeur représentative du déplacement effectif et d'une ou plusieurs informations représentatives du nombre de cycles d'essuyage de la vitre à réaliser au cours d'une durée déterminée, le système de commande (16) détermine et stocke la ou les valeurs représentatives de la vitesse de déplacement correspondante de l'élément d'essuyage (45).

## Patentansprüche

1. Wischvorrichtung (10) einer Scheibe eines Kraftfahrzeugs von dem Typ mit einem Elektromotor (12), dessen Ausgangswelle (24) ein Wischelement (45) antreibt, wie zum Beispiel einen Scheibenwischer, der die Scheibe durch eine alternierende Wischbewegung wischt, zwei mechanische Anschläge (22, 28, 29, 46), die mit dem Wischelement (45) zusammenwirken, um seinen maximalen Lauf zu bestimmen, und ein Steuersystem (16) des Elektromotors (12) und von dem Typ, der einen Positionssensor und Verarbeitungsmittel der vom Sensor gelieferten Informationen umfasst, so dass die Position der Anschläge (28, 29) bestimmt wird, **dadurch gekennzeichnet, dass** der Elektromotor (12) ein Gehäuse umfasst und dass wenigstens ein Anschlag (22) ein Teil des Gehäuses ist.

2. Wischvorrichtung (10) gemäß dem vorherigen Anspruch, **dadurch gekennzeichnet, dass** das Steuersystem (16) Datenspeichermittel zum Speichern insbesondere von die Position der Anschläge (28, 29) darstellenden Informationen umfasst.

3. Wischvorrichtung (10) gemäß Anspruch 1 oder 2, **dadurch gekennzeichnet, dass** wenigstens ein Anschlag (28, 29) ein Formdetail der Struktur des Kraftfahrzeugs ist.

4. Wischvorrichtung (10) gemäß einem der vorherigen Ansprüche, **dadurch gekennzeichnet, dass** wenigstens ein Anschlag (28, 29) ein auf den Elektromotor (12) bezogenes Zwischenelement (26) ist.

5. Wischvorrichtung (10) gemäß dem vorherigen Anspruch, **dadurch gekennzeichnet, dass** das Zwischenelement (26) ein Dichtungsring des durch seine Ausgangswelle (24) durchquerten Elektromotors (12) ist.

6. Wischvorrichtung (10) gemäß einem der vorherigen Ansprüche, **dadurch gekennzeichnet, dass** der Positionssensor ein absoluter Positionssensor ist.

7. Automatisches Initialisierungsverfahren des Steuersystems des Motors einer Wischvorrichtung (10) gemäß einem der vorherigen Ansprüche, **dadurch gekennzeichnet, dass** das Steuersystem 16 bei der Unter-Spannungsetzung einen Lernzyklus initiiert, der die Bestimmung der Position der beiden mechanischen Anschläge (28, 29) erlaubt.

8. Automatisches Initialisierungsverfahren gemäß dem vorherigen Anspruch, **dadurch gekennzeichnet, dass** das Steuersystem (16) bei der ersten Unter-Spannungsetzung feststellt, das es sich um die erste Unter-Spannungsetzung der Vorrichtung handelt und dass es den Lernzyklus initiiert.

9. Automatisches Initialisierungsverfahren gemäß dem vorherigen Anspruch, **dadurch gekennzeichnet, dass** die erste Unter-Spannungsetzung der Wischvorrichtung (10) festgestellt wird, wenn die Datenspeichermittel keine die Position der mechanischen Anschläge (28, 29) darstellende Daten enthalten.

10. Automatisches Initialisierungsverfahren gemäß Anspruch 7 bis 9, **dadurch gekennzeichnet, dass** der Lernzyklus die folgenden sukzessiven Stufen umfasst:
- In Rotation versetzen des Motors (12), der dann das Wischelement (45) in einer ersten Richtung antreibt, bis das Steuersystem feststellt, dass das Wischelement (45) mit dem ersten mechanischen Anschlag (28) zum Anliegen kommt,
- Speichern der die Position des ersten Anschlags (28) darstellenden Informationen,
- Umkehrung der Rotationsrichtung des Elektromotors, der dann das Wischelement (45) in einer zweiten Richtung antreibt, bis das Steuersystem feststellt, dass das Wischelement (45) mit dem zweiten mechanischen Anschlag (29) zum Aufliegen kommt,
- Speicherung der die Position des zweiten Anschlags (29) darstellenden Informationen,
- Bestimmung, insbesondere durch Berechnung, der den maximalen Lauf der Wischvorrichtung (45), der ihrer Verschiebung zwischen den beiden mechanischen Anschlägen (28, 29) entspricht, darstellenden Informationen durch das Steuersystem.

11. Automatisches Initialisierungsverfahren gemäß dem vorherigen Anspruch, **dadurch gekennzeichnet, dass** das Steuersystem das Aufliegen zwischen dem Wischelement (45) und den Anschlägen (28, 29) feststellt, wenn der Wert des Stroms, der den Elektromotor (12) versorgt, größer ist als ein vorbestimmter Wert.

12. Automatisches Initialisierungsverfahren gemäß Anspruch 7 bis 11, **dadurch gekennzeichnet, dass** das Steuersystem (16) den die effektive Verschiebung des Wischelements (45) darstellenden Wert bestimmt, der dem Bereich entspricht, der gewischt werden soll, und der kleiner als oder gleich groß wie der maximale Lauf des Wischelements (45) zwischen den beiden mechanischen Anschlägen (28, 29) ist.

13. Automatisches Initialisierungsverfahren gemäß dem vorherigen Anspruch, **dadurch gekennzeichnet, dass** das Steuersystem (16) den oder die die dem Wischelement (45) entsprechende Verschiebungsgeschwindigkeit A darstellende(n) Wert(e) ausgehend von dem die effektive Verschiebung und eine oder mehrere, die Anzahl der Wischzyklen der im Verlauf einer vorbestimmten Dauer zu realisierenden Wischzyklen darstellenden Informationen bestimmt und speichert.

## Claims

1. A wiper device (10) for a motor vehicle of the type comprising an electric motor (12) whose output shaft (24) drives a wiper element (45) such as a wiper which wipes the windows by an alternating sweep movement, two mechanical stops (22, 28, 29, 46) which cooperate with the wiper element (45) in order to determine its maximum travel and a system (16) for controlling the electric motor (12), and of the type which comprises a position sensor and a means of processing the information supplied by the sensor so as to determine the position of the stops (28, 29), **characterised in that** the electric motor (12) comprises a housing, and **in that** at least one stop (22) is a part of the housing.

2. A wiper device (10) according to the preceding claim, **characterised in that** the control system (16) comprises data storage means for storing in particular information representing the position of the stops (28, 29).

3. A wiper device (10) according to one of Claims 1 or 2, **characterised in that** at least one stop (28, 29) is a shape detail of the structure of the vehicle.

4. A wiper device (10) according to any one of the preceding claims, **characterised in that** at least one stop (28, 29) is an intermediate element (26) attached to the electric motor (12).

5. A wiper device (10) according to the preceding claim, **characterised in that** the intermediate element (26) is a sealing ring for the electric motor (12) through which its output shaft (24) passes.

6. A wiper device (10) according to any one of the preceding claims, **characterised in that** the position sensor is an absolute position sensor.

7. A method for the automatic initialisation of the system for controlling the motor of a wiper device (10) according to any one of the preceding claims, **characterised in that**, when it is powered up, the control system (16) initiates a learning cycle which makes it possible to determine the position of the two mechanical stops (28, 29).

8. An automatic initialisation method according to the preceding claim, **characterised in that**, on first powering up, the control system (16) detects that it is a case of the first powering up of the device, and **in that** it initiates the learning cycle.

9. An automatic initialisation method according to the preceding claim, **characterised in that** the first powering up of the wiper device (10) is detected when the data storage means do not contain any data representing the position of the mechanical stops (28, 29).

10. An automatic initialisation method according to any one of Claims 7 to 9, **characterised in that** the learning cycle comprises the following successive steps:
- rotation of the motor (12), which then drives the wiper element (45) in a first direction until the control system detects that the wiper element (45) is in abutment with the first mechanical stop (28),
- storage of information representing the position of the first stop (28),
- reversal of the direction of rotation of the electric motor, which then drives the wiper element (45) in a second direction until the control system detects that the wiper element (45) is in abutment with the second mechanical stop (29),
- storage of the information representing the position of the second stop (29),
- determination, in particular by calculation, by the control system, of the information representing the maximum travel of the wiper element (45), which corresponds to its movement between the two mechanical stops (28, 29).

11. An automatic initialisation method according to the preceding claim, **characterised in that** the control system detects the abutment between the wiper element (45) and the stops (28, 29) when the value of the current which supplies the electric motor (12) is greater than a predetermined value.

12. An automatic initialisation method according to any one of Claims 7 to 11, **characterised in that** the control system (16) determines the value representing the actual movement of the wiper element (45), which corresponds to the area which is to be wiped and which is less than or equal to the maximum travel of the wiper element (45) between the two mechanical stops (28, 29).

13. An automatic initialisation method according to the preceding claim, **characterised in that**, from the value representing the actual movement and one or more items of information representing the number of wiping cycles of the window to be performed during a given period, the control system (16) determines and stores the value or values representing the corresponding speed of movement of the wiper element (45).
